(19) Europäisches Patentamt / European Patent Office / Office européen des brevets

(11) **EP 2 378 707 B1**

(12) **EUROPEAN PATENT SPECIFICATION**

(45) Date of publication and mention of the grant of the patent:
**24.04.2013 Bulletin 2013/17**

(51) Int Cl.:
*H04L 9/32* *(2006.01)*          *H04L 9/30* *(2006.01)*

(21) Application number: **10154880.8**

(22) Date of filing: **26.02.2010**

(54) **Implementation of the ECDSA, DSA, El Gamal cryptosystems, and variations thereof, with improved security against side-channel attacks.**

Implementierung von ECDSA-, DSA- und El Gamal-Kryptosystemen, sowie Varianten davon, mit erhöhter Sicherheit gegen Seitenkanalangriffe.

Mise en oeuvre des schémas ElGamal, DSA, ECDSA ainsi que leurs variations, sécurisés contre des attaques par canaux auxiliaires.

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**19.10.2011 Bulletin 2011/42**

(73) Proprietor: **Certicom Corp.**
**Mississauga, Ontario L4W 0B5 (CA)**

(72) Inventor: **Brown, Daniel R.L**
**Mississauga Ontario L4W 5L1 (CA)**

(74) Representative: **Moore, Barry et al**
**Hanna Moore & Curley**
**13 Lower Lad Lane**
**Dublin 2 (IE)**

(56) References cited:
WO-A1-2008/106793

- **THOMAS S MESSERGES: "Power analysis attacks and countermeasures for cryptographic algorithms" DISSERTATION,, 20 June 2000 (2000-06-20), pages 1-234, XP009134794 Chicago, Illinois ISBN: 0-599-84667-4**
- **PIERRE-ALAIN FOUQUE ET AL: "The Carry Leakage on the Randomized Exponent Countermeasure" CRYPTOGRAPHIC HARDWARE AND EMBEDDED SYSTEMS, CHES 2008; [LECTURE NOTES IN COMPUTER SCIENCE], SPRINGER BERLIN HEIDELBERG, BERLIN, HEIDELBERG, vol. 5154, 10 August 2008 (2008-08-10), pages 198-213, XP019102177 ISBN: 978-3-540-85052-6**

## Description

The following relates generally to ElGamal signatures and their variants.

A cryptographic system is a computer system that uses cryptography, typically to secure or authenticate data communication between a pair of computing devices connected to one another through a data communication link in the system. Each computing device has a cryptographic unit with the processing capacity to implement one or more cryptographic protocols used to secure or authenticate the data communication. The cryptographic protocols typically perform arithmetic operations on the bit strings representing parameters, messages, or data in the protocols to produce a bit string representing the output from the protocol.

In a cryptographic system that employs a public-key scheme, each correspondent in the system utilizes a private key and a corresponding public key related to the private key by a mathematical function. The mathematical function presents a "difficult" mathematical problem to ensure that a private key of a correspondent cannot be obtained from the corresponding public key. An example of one such problem is the discrete logarithm problem over a finite field. A particularly robust and efficient public-key system based on the discrete logarithm problem makes use of points on an elliptic curve defined over a finite field. Such systems, referred to as elliptic curve cryptography (ECC) systems, offer high levels of security at faster computation time than other systems.

Public-key schemes allow for elegant signature algorithms that provide non-repudiation services. The ElGamal signature and its variants are one such group of signatures that is used in a public-key scheme based on the discrete logarithm problem. The ElGamal signature scheme and its variants are known in the art and are described, for example, in detail in Chapter 11 Section 11.5 of "Handbook of Applied Cryptography", Menez et al., CRC Press, 1997.

The ElGamal signature scheme can be summarized as follows. Consider a cryptographic system having cryptographic parameters which include an appropriate prime number $p$ and a generator $\alpha$ of the multiplicative group $Z_p^{\bullet}$. A correspondent $A$ has long-term private key $d$ and corresponding long-term public key $y = \alpha^d \bmod p$. The computational unit of correspondent $A$ performs the following steps to generate an ElGamal signature for a message $m$:

> (a) select a random secret integer $k$, $1 \leq k \leq p - 2$, with $\gcd(k, p\text{-}1) = 1$;
> (b) compute a first signature component $r = \alpha^k \bmod p$;
> (c) compute $k^{-1} \bmod(p\text{-}1)$; and
> (d) compute a second signature component $s = k^{-1}(h(m)\text{-}dr)\bmod(p\text{-}1)$ where $h(.)$ is a cryptographic hash function.

The signature generated is the pair $(r, s)$.

Variations of the ElGamal signature scheme exist and are known in the art. For example, such variations include the Digital Signature Algorithm (DSA), the Schnorr signature scheme, and ElGamal signatures with message recovery. Most of these variations involve slightly different forms of what is commonly referred to as the signing equation, that is, the equation used to compute the second signature component s in step (d) above. A popular variation of the ElGamal signature scheme is the Digital Signature Algorithm (DSA). In the DSA, the signing equation is $s = k^{-1}(h(m)+dr)\bmod q$, where $q$ is the order of a cyclic group in $Z_p^{\bullet}$.

In elliptic curve cryptographic systems, a commonly used signature scheme is the Elliptic Curve Digital Signature Algorithm (ECDSA). A summary of the ECDSA is as follows. Assume correspondent $A$ has a long-term private key $d$ and a corresponding long-term public key $D = dG$, where $G$ is a base point on the curve specified in the domain parameters. $G$ will be assumed to have prime order $n$. Correspondent A therefore performs the following steps to generate an ECDSA signature for a message $m$:

> (a) select a random secret ephemeral private key $k \in_R [1, n\text{-}1]$ and calculate associated ephemeral public key $K = kG$;
> (b) compute a first signature component $r = f(K) = \overline{x_K} \bmod n$ where $\overline{x_K}$ is the integer representation of the first coordinate (also sometimes called the x-coordinate) of elliptic curve point $K$; and
> (c) compute a second signature component $s = k^{-1}(h(m)+dr)\bmod n$ where $h(\cdot)$ is a cryptographic hash function whose outputs have bit length no more than that of $n$.

The signature generated is the pair $(r,s)$.

Cryptographic systems may be subject to side channel attacks, in which timing information, electromagnetic emissions, power usage, or other side channel information is used to try and determine a secret value utilized by the cryptographic unit during calculations. Multiplication in a computational unit of a cryptographic system is typically implemented using a series of additions. Therefore, when calculating the term $dr$ in the signing equation, the long-term private key $d$ is directly added to itself $r$ times. Generally, the more operations in which long-term private key $d$ is directly used, the greater the probability that this private key may be compromised by a side channel attack.

Moreover, interlopers who employ side channel attacks are generally aware that in generating ElGamal signatures and their variants the long-term private key $d$ is only utilized in one step of the generation of the signature, that being in the calculation of the signature component s by way of the signing equation. Therefore, an interloper may try and use differential side channel analysis to obtain information about long-term private key *d*. That is, an interloper may try and obtain information from the side channel over the course of signing multiple messages and compare the differences between this information to try and obtain information about private key *d*. By analysing the differences between the information upon multiple uses of private key *d* (i.e. upon multiple signing operations), it may be possible to extract enough information about long-term private key *d* to compromise its secrecy. The more operations in which long-term private key *d* is directly used in each signing operation, the greater the probability that differential side channel analysis may compromise private key *d*.

Thomas S. Messerges Ph.D Dissertation: "Power analysis attacks and countermeasures for cryptographic algorithms", University of Illinois at Chicago, discloses that a vulnerable device, such as a smartcard, can leak sensitive information. Attackers monitoring the power consumption of a vulnerable device can extract this sensitive information and use it to breach the device's security, and methods for securely implementing cryptographic algorithms need to be devised.

WO2008/106793 discloses that execution of the Elliptic Curve Digital Signature Algorithm (ECDSA) requires determination of a signature, which determination involves arithmetic operations. Some of the arithmetic operations employ a long term cryptographic key. It is the execution of these arithmetic operations that can make the execution of the ECDSA vulnerable to a power analysis attack. In particular an attacker using a power analysis attack may determine the long term cryptographic key. By modifying the sequence of operations involved in the determination of the signature and the inputs to those operations, power analysis attacks may no longer be applied to determine the long term cryptographic key.

GENERAL

The following may provide a method of generating a digital signature of a message in a cryptographic data communication system based on an underlying group, the correspondent having a processing unit and having stored in memory a long-term private key, said digital signature having a first signature component and a second signature component, said second signature component being a result of a calculation that includes a value equivalent to a multiplication of said long term private key with another value, the method comprising: (a) the processing unit obtaining an ephemeral private key and deriving said first signature component using said ephemeral private key; and (b) the processing unit generating said second signature component by performing operations comprising: (i) calculating, a first value, said calculating incorporating said message and including a multiplication with an inverse of said other value; (ii) obtaining said long-term private key from the memory and performing a single additive operation, which additive operation may be addition or subtraction, on said long-term private key to combine the long-term private key with the first value to obtain a masked value, thereby inhibiting exposure of the long-term private key in subsequent operations; (iii) deriving a second value that includes said other value; and (iv) multiplying the masked value with the second value to obtain the second signature component.

The following may provide a device for performing the method.

The following may provide a computer readable medium having stored thereon computer readable instructions for performing the method.

Systems for performing the methods may also be provided, as well as a computer readable medium having stored thereon computer readable instructions for performing the methods.

BRIEF DESCRIPTION

Exemplary embodiments will now be described by way of example only with reference to the accompanying drawings, in which:

Figure 1 is a schematic of a cryptographic communication system;

Figure 2 is a schematic of one specific example of the communication system of Figure 1;

Figure 3 is a schematic of a correspondent operating in the cryptographic communication system of Figure 1;

Figure 4 is a schematic of an embodiment of a method of generating a digital signature in which the signing operation has a reduced number of operations directly involving the long-term private key;

Figure 5 is a schematic of another embodiment of a method of generating a digital signature in which the signing operation has a reduced number of operations directly involving the long-term private key;

Figure 6 is a schematic of yet another embodiment of a method of generating a digital signature in which the signing operation has a reduced number of operations directly involving the long-term private key; and

Figure 7 is a schematic of still another embodiment of a method of generating a digital signature in which the signing operation has a reduced number of operations directly involving the long-term private key.

DESCRIPTION OF PREFERRED EMBODIMENTS

In general terms, the following may provide methods and systems for countering side channel attacks on a correspondent that generates signatures, including ElGamal signatures and their variants. This may be achieved by configuring the processing unit of the correspondent to mask the long-term private key *d* using a single additive operation (addition or subtraction), and then using this masked value in a multiplicative operation to calculate the signature component *s*. This avoids having to directly multiply long-term private key *d* with another value, thereby making it more difficult for an interloper to determine information about the long-term private key *d* through a side channel attack such as differential side channel analysis.

Embodiments will now be described with reference to the figures. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It will also be appreciated that that any module, component, or device exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Any application or module herein described may be implemented using computer readable/executable instructions that may be stored or otherwise held by such computer readable media.

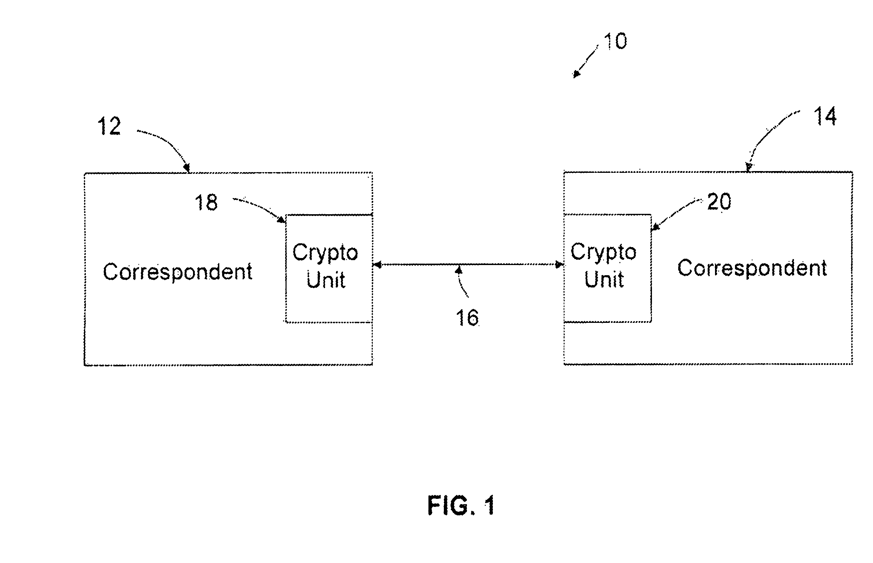

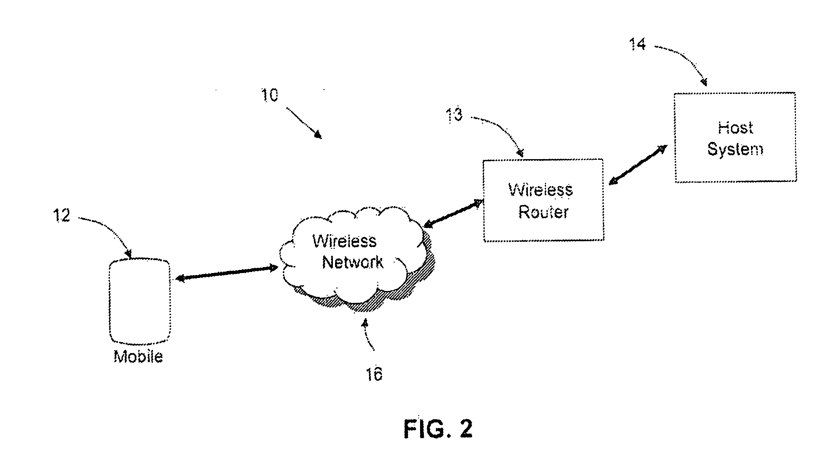

Turning first to Figure 1, a cryptographic data communication system is generally denoted by numeral 10. The system 10 has a first correspondent 12 and a second correspondent 14, which are typically a pair of computing devices, such as a client/server, a pair of computers, or a pair of mobile devices, who communicate with each other over a communication channel 16. Figure 2 shows one specific implementation of the data communication system 10 of Figure 1 in which the correspondent 12 is a mobile device, the correspondent 14 is a corporate enterprise computer system (host system), and the communication channel 16 is a wireless network. In the embodiment shown in Figure 2, the host system 14 provides a host service that offers push-based messages for mobile device 12. The host service is capable of notifying and presenting data to the user in real-time at the mobile device 12 when the data arrives at the host system 14. The wireless router 13 provides the wireless connectivity functionality as it acts to both abstract most of the wireless network's complexities, and it also implements features necessary to support pushing data to the mobile device 12. Although not shown, a plurality of mobile devices may access data from the host system 14.

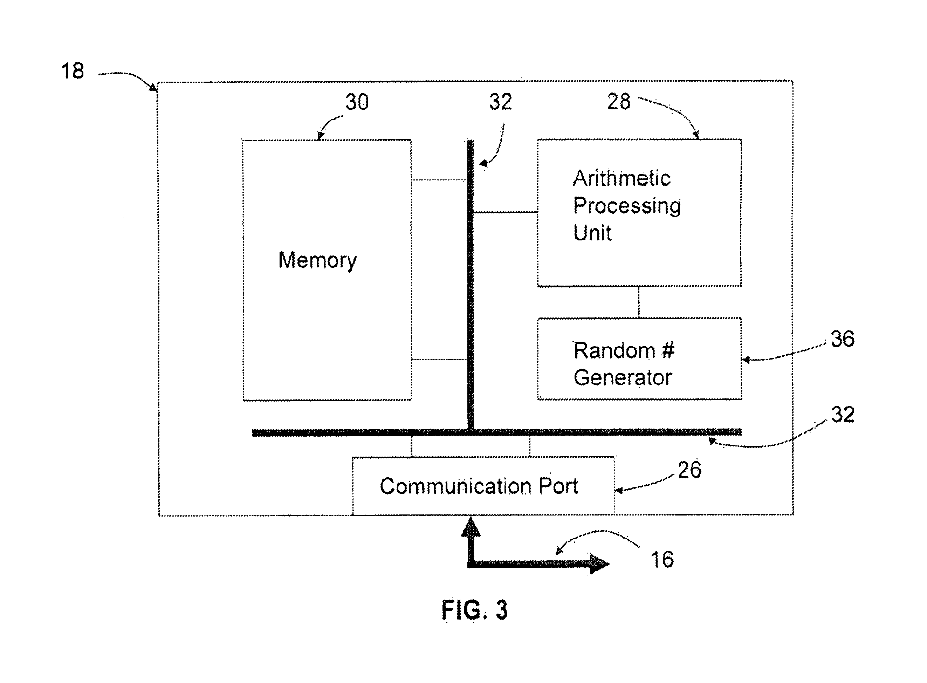

The embodiment shown in Figure 2 is one specific implementation. More generally, and returning to Figure 1, correspondents 12 and 14 are a pair of computing devices that each have a cryptographic unit 18 and 20 respectively to implement cryptographic protocols and associated arithmetic operations based on an underlying group. The cryptographic unit 18 of correspondent 12 is shown in greater detail in Figure 3, it being understood that the cryptographic unit 20 of correspondent 14 will have similar functionality.

Cryptographic unit 18 comprises a communication port 26 for communicating with correspondent 14 over communication channel 16, and an arithmetic processing unit 28 for performing cryptographic operations. The arithmetic processing unit 28 can comprise hardware, computer readable software instructions, or a combination of both, that is configured to perform cryptographic operations such as those described in detail below. Associated with arithmetic processing unit 28 is a random number generator 36 for generating random values for use in signing operations, as will also be described in detail below. The cryptographic unit 18 further includes a memory 30 for storing the results of cryptographic operations performed by the processing unit 28, as well as for storing information received via the port 26. Stored in a secure partition of the memory 30 is the long-term private key *d* of correspondent 12. Internal buses 32 are used by correspondent 12 for communicating information internally.

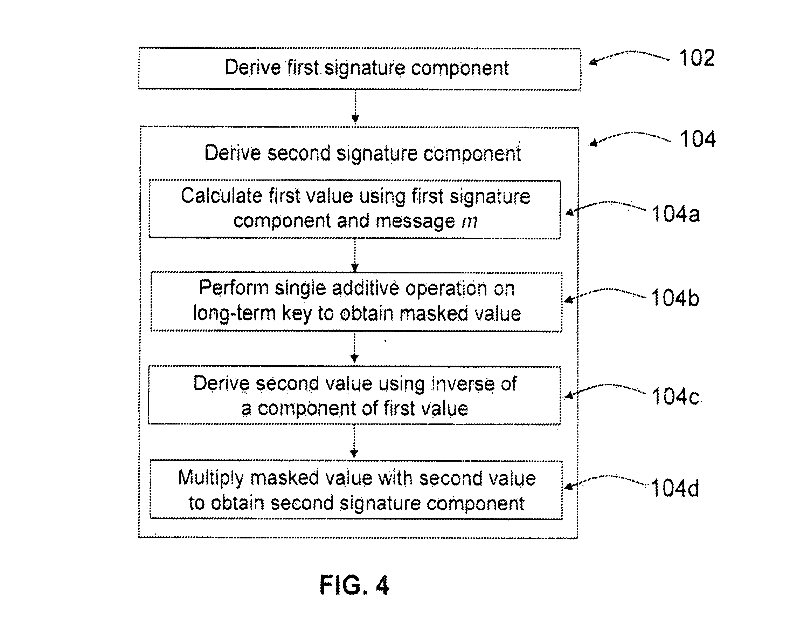

During operation, correspondent 12 wishes to generate a digital signature for a message *m* to be sent to correspondent 14. Therefore, turning to Figure 4, an embodiment of a method of generating a digital signature is shown. The method generally comprises the following steps. In step 102, the processing unit 28 of correspondent 12 obtains an ephemeral private key and derives a first signature component using the ephemeral private key. Next, in step 104, the processing unit 28 of correspondent 12 generates a second signature component by performing operations shown in substeps 104a-d.

In substep 104a, processing unit 28 calculates a first value using the first signature component and the message *m.* Then, in substep 104b, the processing unit 28 obtains a long-term private key from memory 30 and performs a single additive operation on the long-term private key to combine the long-term private key with the first value to obtain a masked value. Next, in substep 104c, the processing unit 28 derives a second value using an inverse of a component of the first value. Finally, in substep 104d, the processing unit 28 multiplies the masked value with the second value to obtain the second signature component. The signature comprises the first signature component and the second signature component.

Advantageously, in the method described in Figure 4, the long-term private key is masked using a single additive operation. Once the long-term private key is masked, exposure of the key is inhibited in subsequent operations.

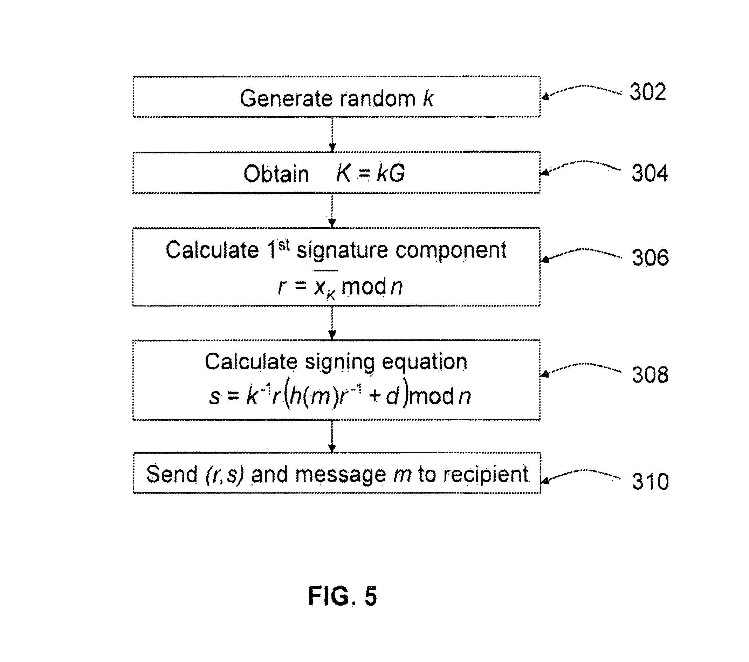

Specific embodiments will now be described in the context of particular signature schemes. Turning therefore to Figure 5, an embodiment of a method will now be described in which the cryptographic unit 18 of correspondent 12 operates on a message $m$ to generate a signature $(r, s)$ that is verifiable using the ECDSA protocol. The signing operation used to generate signature component $s$ is performed by the processing unit 28 as described below in order to counter side channel attacks that attempt to compromise long-term private key $d$.

First, in step 302, the random number generator 36 generates a bit string representing a random number $k \in_R [1, n-1]$, which is used as the ephemeral private key in the signature generation portion of the ECDSA. Next, in step 304, the processing unit 28 obtains the ephemeral private key $k$ and performs a point multiplication on a bit string representing the generator G of the underlying group to obtain the corresponding ephemeral public key as $K = kG$. Preferably, $K$ is calculated using a Montgomery Ladder as is known in the art. Then, in step 306, processing unit 28 derives a first signature component $r$ of signature $(r, s)$ as $r = f(K) = \overline{x_K} \pmod{n}$, where $\overline{x_K}$ is the integer representation of the first coordinate of elliptic curve point $K$. Next, in step 308, the processing unit 28 computes the signing equation $s$. That is, the processing unit 28 generates the second signature component $s$ of signature $(r, s)$. The processing unit 28 is configured to calculate the signing equation $s$ by first masking the long-term private key $d$ using a single addition of the key $d$ with another value, and then using this masked value in a multiplicative operation. Specifically, the processing unit 28 performs operations on bit strings modulo $n$ to compute signing equation $s$ as $s = k^{-1}r(h(m)r^{-1} + d) \pmod{n}$. In calculating $s$, processing unit 28 calculates a first value $h(m)r^{-1} \pmod{n}$. It then obtains private key $d$ from memory 30 and adds $d$ to $h(m)r^{-1}$ to obtain the masked value $h(m)r^{-1} + d \pmod{n}$. Then, processing unit 28 multiplies the masked value $h(m)r^{-1} + d \pmod{n}$ by $k^{-1}r \pmod{n}$ to obtain $s = k^{-1}r(h(m)r^{-1} + d) \pmod{n}$.

It will be observed that $s = k^{-1}r(h(m)r^{-1} + d) \pmod{n}$ produces the same value for $s$ as the conventional ECDSA signing equation $s = k^{-1}(h(m) + dr) \pmod{n}$, but that in calculating $s = k^{-1}r(h(m)r^{-1} + d) \pmod{n}$ only a single additive operation is performed directly using long-term private key $d$, that being the addition $h(m)r^{-1} + d \pmod{n}$. This is advantageous over calculating the multiplication $dr \pmod{n}$, which involves directly adding d to itself $r$ times. By reducing the number of operations that directly utilize long-term private key d, it is less likely that an interloper will be able to obtain information about long-term private key $d$ through a side channel attack.

For further enhanced resistance against side channel attacks, each multiplication performed by the processing unit 28 in calculating the signing equation can be performed using a Montgomery ladder.

After signature $(r, s)$ is generated, finally, in step 310, correspondent 12 forwards signature $(r, s)$ and message m to correspondent 14 using the communication port 26.

In the embodiment described with reference to Figure 5, the cryptographic unit 18 is configured to generate signatures verifiable using the ECDSA protocol. However, it will be appreciated that the technique above can be applied to other ElGamal signature schemes or their variants, regardless of whether or not elliptic curve cryptographic operations are being performed. More generally, for any signature scheme that involves the computation of a signature component $s$ and that utilizes the long-term private key $d$ and the direct multiplication of $d$ with another value, the processing unit 28 can be configured to calculate an alternative form of the signing equation in which the long-term private key $d$ is first masked by combining the long-term private key $d$ with another value using a single additive operation (an addition or subtraction), and then using this masked value in a multiplicative operation to obtain the signature component $s$.

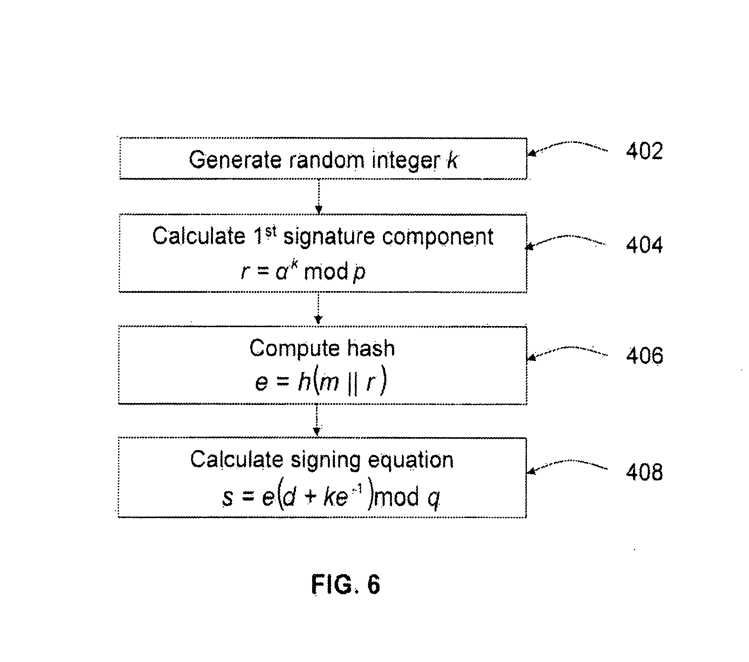

For example, turning to Figure 6, an embodiment of a method will now be described in which cryptographic unit 18 of correspondent 12 generates a digital signature $(e, s)$ for a message m that is verifiable by correspondent 14 using the Schnorr signature scheme protocol. The signing operation to generate signature component $s$ is performed as described below in order to counter side channel attacks that attempt to compromise long-term private key $d$.

First, in step 402, the random number generator 36 generates a bit string representing a random secret integer k, $1 \le k \le q-1$, where $q$ is the order of a subgroup in $Z_p^{\bullet}$, and where $p$ is a large prime number. The secret integer k can be considered to be the ephemeral private key in the signature generation portion of the Schnorr signature scheme. Next, in step 404, the processing unit 28 obtains ephemeral private key $k$ and generates corresponding ephemeral public key $r = \alpha^k \pmod{p}$, where $\alpha$ is the generator specified in the domain parameters. Preferably, $r$ is calculated using a Montgomery Ladder as is known in the art. Then, in step 406, processing unit 28 derives the first signature component $e$ by calculating the hash $e = h(m \| r)$. Next, in step 408, the processing unit 28 calculates the signature equation $s$ to obtain the second signature component. The processing unit 28 is configured to calculate the signing equation $s$ by first masking the long-term private key $d$ using a single addition of the key $d$ with another value, and then using this masked value in a multiplicative operation. Specifically, the processing unit 28 performs operations modulo $q$ to generate second signature component $s$ as $s = e(d + ke^{-1})$ (mod $q$). In calculating $s$, processing unit 28 calculates a first value $ke^{-1}$ (mod $q$). It then masks key $d$ using a single addition to add $d$ to $ke^{-1}$, and then multiplies the masked value $d + ke^{-1}$ (modq) by $e$ to obtain $s = e(d + ke^{-1})$ (mod $q$).

Advantageously, $s = e(d + ke^{-1})$ (mod q) produces the same value of $s$ as the conventional Schnorr signing equation $s = (de + k)$ (mod $q$), but in calculating $s = e(d + ke^{-1})$ (mod q) only one additive operation is performed that directly utilizes long-term private key $d$, that being the addition d + $ke^{-1}$ (mod $q$). This is advantageous over calculating the multiplication $de$ (mod $q$), which involves directly adding d to itself $e$ times. By reducing the number of operations that directly utilize long-term private key $d$, it is less likely that an interloper will be able to obtain information about long-term private key $d$ through a side channel attack.

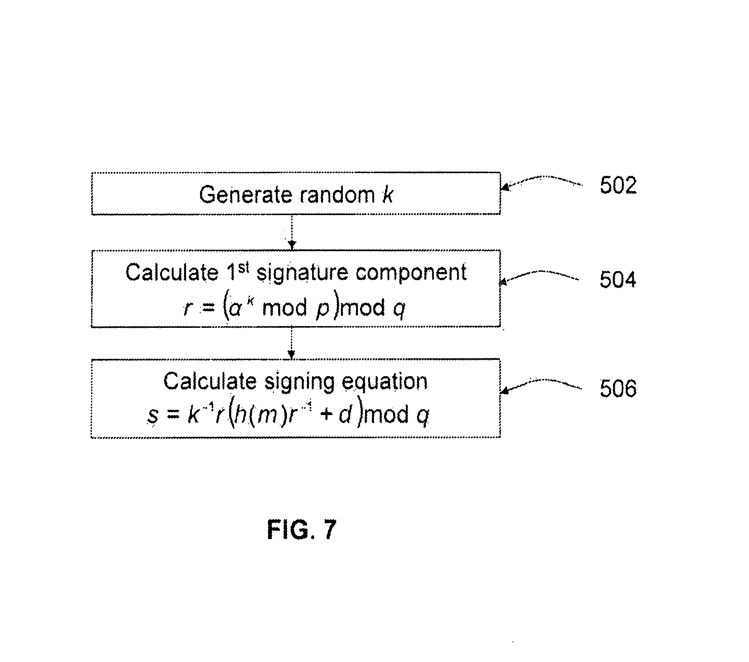

As another example, turning to Figure 7, an embodiment of a method will now be described in which cryptographic unit 18 of correspondent 12 generates a digital signature $(r, s)$ for a message m that is verifiable by correspondent 14 using the DSA protocol. However, the DSA signing operation is instead performed by the processing unit 28 as described below in order to counter side channel attacks that attempt to compromise long-term private key $d$.

Cryptographic unit 18 stores in its memory 30 cryptographic parameters $p$, $q$, and $\alpha$, where $\alpha$ is a generator of a cyclic group of order $q$ in $Z_p^{*}$. Cryptographic unit 18 accesses these parameters via the bus 32 as necessary when performing the operations described below. First, in step 502, the random number generator 36 generates a random secret integer k, $0 < k < q$, which is used as the ephemeral private key in the signature generation portion of the DSA. Next, in step 504, the processing unit 28 obtains ephemeral private key k and derives first signature component $r$ as $r = (\alpha^k \bmod p)\bmod q$. Preferably, r is calculated using a Montgomery Ladder as is known in the art. Then, in step 506, the processing unit 28 calculates the signing equation. That is, the processing unit 28 generates the second signature component $s$ of signature $(r, s)$. The processing unit 28 is configured to calculate the signing equation $s$ by first masking the long-term private key $d$ using a single addition of the key $d$ with another value, and then using this masked value in a multiplicative operation. Specifically, the processing unit 28 performs operations modulo $q$ to compute component $s$ of signature $(r, s)$ as $s = k^{-1}r(h(m)r^{-1} + d)$ (mod $q$). In calculating $s$, processing unit calculates a first value $h(m)r^{-1}$ (mod $q$). It then obtains private key $d$ from memory 30 and performs a single addition to add $d$ to $h(m)r^{-1}$ to obtain masked value $h(m)r^{-1} + d$ (mod $q$). Then, processing unit 28 multiplies masked value $h(m)r^{-1} + d$ (mod $q$) by a second value $k^{-1}r$ (mod $q$) to obtain $s = k^{-1}r(h(m)r^{-1} + d)$ (modq). Advantageously $s = k^{-1}r(h(m)r^{-1} + d)$ (modq) produces the same value of $s$ as the conventional DSA signing equation $s = k^{-1}(h(m) + dr)$ (modq), but in calculating $s = k^{-1}r(h(m)r^{-1} + d)$ (mod $q$) only a single additive operation is performed directly using long-term private key $d$, that being the addition $h(m)r^{-1} + d$ (modq). This is advantageous over calculating the multiplication $dr$ (modq), which involves directly adding $d$ to itself $r$ times. By reducing the number of operations that directly utilize long-term private key $d$, it is less likely that an interloper will be able to obtain information about long-term private key $d$ through a side channel attack.

In the embodiments described above, a series of operations are performed by the processing unit 28 to generate the signing equation $s$ in a manner that reduces the number of operations that directly utilize long-term private key $d$. Specifically, in the above embodiments, the direct multiplication of long-term private key $d$ with another value is avoided to circumvent adding long-term private key $d$ to itself multiple times. Instead, only a single addition involving the long-term private key $d$ is utilized to mask the long-term private key $d$, and then this masked value is used in a multiplicative operation to generate the signing equation $s$. The fewer the operations directly involving long-term private key $d$, the less likely an interloper will be able to derive information about long-term private key $d$ through a side channel attack. Whist not necessary, by additionally implementing one or more of the multiplications using a Montgomery ladder, further resistance against side channel attacks can be achieved.

It will be appreciated that the technique described above can be extended to other ElGamal signature schemes or their variants, regardless of whether the underlying group is additive or multiplicative.

The following are examples of the technique as applied to the ElGamal signature scheme and some of its other variants besides those described in the figures above.

1. ElGamal: The signing equation $s$ can be calculated by the processing unit 28 as $s = k^{-1}r(h(m)r^{-1} - d)$ (mod($p-1$)), where $p$ is a prime number and is part of the underlying cryptographic parameters. In calculating $s$, processing unit 28 calculates a first value $h(m)r^{-1}$ (mod($p-1$)). It then obtains private key $d$ from memory 30 and performs a single subtraction to subtract $d$ from $h(m)r^{-1}$ to obtain masked value $h(m)r^{-1} - d$ (mod($p-1$)). Then, processing unit 28 multiplies masked value $h(m)r^{-1} - d$ (mod($p-1$)) by a second value $k^{-1}r$ (mod($p-1$)) to obtain $s = k^{-1}r(h(m)r^{-1} - d)$ (mod($p-1$)). Advantageously $s = k^{-1}r(h(m)r^{-1} - d)$ (mod($p-1$)) produces the same value of $s$ as the conventional ElGamal signing equation $s = k^{-1}(h(m)-dr)$ (mod($p$-1)), but in calculating $s = k^{-1}r(h(m)r^{-1}-d)$ (mod($p$-1)) only a single additive operation is performed directly using long-term private key $d$, that being the subtraction $h(m)r^{-1}-d$ (mod($p$-1)).

2. A variation of ElGamal: The signing equation $s$ can be calculated by the processing unit 28 as $s = r(d+kr^{-1}h(m))$ (mod($p$-1)). In calculating $s$, processing unit 28 calculates a first value $kr^{-1}h(m)$ (mod($p$-1)). It then obtains private key $d$ from memory 30 and performs a single addition to add $d$ to $kr^{-1}h(m)$ (mod($p$-1)) to obtain masked value $d+kr^{-1}h(m)$ (mod($p$-1)). Then, processing unit 28 multiplies masked value $d + kr^{-1}h(m)$ (mod($p$-1)) by a second value $r$ to obtain $s = r(d + kr^{-1}h(m))$ (mod($p$-1)). Advantageously $s = r(d + kr^{-1}h(m))$ (mod($p$-1)) produces the same value of $s$ as signing equation $s = dr + kh(m)$ (mod($p$-1)), but in calculating $s = r(d + kr^{-1}h(m))$ (mod($p$-1)) only a single additive operation is performed directly using long-term private key $d$, that being the addition $d + kr^{-1}h(m)$ (mod($p$-1)).

3. Another variation ofElGamal: The signing equation $s$ can be calculated by the processing unit 28 as $s = h(m)(d+krh(m)^{-1})$(mod($p$-1)) calculating $s$, processing unit 28 calculates a first value $krh(m)^{-1}$(mod($p$-1)). It then obtains private key $d$ from memory 30 and performs a single addition to add $d$ to $krh(m)^{-1}$ to obtain masked value $d+krh(m)^{-1}$ (mod($p$-1)). Then, processing unit 28 multiplies masked value $d+krh(m)^{-1}$(mod($p$-1)) by a second value $h(m)$ to obtain $s = h(m)(d+krh(m)^{-1})$(mod($p$-1)). Advantageously $s = h(m)(d+krh(m)^{-1})$(mod($p$-1)) produces the same value of $s$ as signing equation $s = dh(m) + kr$ (mod($p$-1)), but in calculating $s = h(m)(d+krh(m)^{-1})$ (mod($p$-1)) only a single additive operation is performed directly using long-term private key $d$, that being the addition $d+krh(m)^{-1}$ (mod($p$-1)).

4. Generalized El Gamal: The signing equation $s$ can be calculated by the processing unit 28 as $s = k^{-1}h(r)(h(m)h(r)^{-1}-d)$ (mod$n$), where $n$ is the order of the underlying group. In calculating s, processing unit 28 calculates a first value $h(m)h(r)^{-1}$ (mod$n$). It then obtains private key $d$ from memory 30 and performs a single subtraction to subtract $d$ from $h(m)h(r)^{-1}$ to obtain masked value $h(m)h(r)^{-1}— d$ (mod $n$). Then, processing unit 28 multiplies masked value $h(m)h(r)^{-1}— d$ (mod $n$) by a second value $k^{-1}h(r)$ (mod$n$) to obtain $s = k^{-1}h(r)(h(m)h(r^{-1}—d)$ (mod$n$). Advantageously $s = k^{-1}h(r)(h(m)h(r^{-1}—d)$ (mod$n$) produces the same value of $s$ as the conventional Generalized ElGamal signing equation $s = k^{-1}(h(m) — dh(r))$ (mod $n$), but in calculating $s = k^{-1}h(r)(h(m)h(r^{-1}—d)$ (mod$n$) only a single additive operation is performed directly using long-term private key $d$, that being the subtraction $h(m)h(r)^{-1} — d$ (mod $n$).

5. ElGamal with Message Recovery: The signing equation $s$ can be calculated by the processing unit 28 as $s = R(m)r(d + k(R(m)r)^{-1})$ (mod$q$), where $R(m)r = e$ is the first signature component, $q$ divides $p$—1, and $p$ is a prime integer. In calculating $s$, processing unit 28 calculates a first value $k(R(m)r)^{-1}$ (mod$q$). It then obtains private key $d$ from memory 30 and performs a single addition to add $d$ to $k(R(m)r)^{-1}$ to obtain masked value $d + k(R(m)r)^{-1}$ (mod$q$). Then, processing unit 28 multiplies masked value $d + k(R(m)r)^{-1}$(mod$q$) by a second value $R(m)r$ (mod$q$) to obtain $s = R(m)r(d + k(R(m)r)^{-1})$ (mod$q$). Advantageously $s = R(m)r(d + k(R(m)r)^{-1}$ (mod$q$) produces the same value of $s$ as the conventional signing equation $s = dR(m)r + k$ (mod$q$), but in calculating $s = R(m)r(d + k(R(m)r)^{-1})$ (mod$q$) only one operation is performed directly using long-term private key $d$, that being the addition $d + k(R(m)r)^{-1}$ (mod$q$).

In all of the embodiments described above, the signature component $s$ is calculated by masking the long-term private key $d$ using a single additive operation (addition or subtraction) to combine the key $d$ with a first value, and then the masked value is multiplied by a second value to obtain $s$. The first value is calculated using the first signature component and the message m, and the second value is derived using the inverse of a component of the first value. In this way, the signature component $s$ is generated using a method that counters the effectiveness of side channel attacks such as differential side channel analysis by avoiding a direct multiplication using long-term private key $d$.

Although the above techniques have been described with reference to certain specific embodiments, various modifications thereof will be apparent to those skilled in the art without departing from the scope of the claims appended hereto.

**Claims**

1. A method of generating a digital signature of a message in a cryptographic data communication system (10) based on an underlying group, the method being performed by a correspondent (12) in the data communication system (10), the correspondent (12) having a processing unit (28) and having stored in memory (30) a long-term private key, said digital signature having a first signature component and a second signature component, said second signature component being calculated without directly multiplying said long term private key with another value, the method comprising:

   (a) the processing unit (28) obtaining an ephemeral private key and deriving said first signature component using said ephemeral private key; and
   (b) the processing unit (28) generating said second signature component by performing operations comprising:

      (i) calculating a first value, said calculating incorporating said message and including a multiplication with an inverse of said other value;

(ii) obtaining said long-term private key from the memory (30) and performing a single additive operation, said additive operation being one of an addition and a subtraction, on said long-term private key to combine said long-term private key with said first value to obtain a masked value, thereby inhibiting exposure of said long-term private key in subsequent operations;

(iii) deriving a second value that includes said other value; and,

(iv) multiplying said masked value with said second value to obtain said second signature component.

2. The method of claim 1 wherein said second value is also derived using said ephemeral private key.

3. The method of claim 1 or claim 2 wherein said first value has the form $h(m)r^{-1}$ (mod $n$), said masked value has the form $h(m)r^{-1} + d$ (mod $n$), said second value has the form $k^{-1}r$ (mod $n$), and said second signature component is calculated as $k^{-1}r(h(m)r^{-1} + d)$ (mod $n$); wherein $m$ is said message, $r$ is said first signature component, $k$ is said ephemeral private key, $d$ is said long-term private key, $h()$ represents a cryptographic hash function, and $n$ is the order of said underlying group.

4. The method of claim 3 wherein said underlying group is an elliptic curve group, and said digital signature is verifiable using an Elliptic Curve Digital Signature Algorithm (ECDSA) verification protocol.

5. The method of claim 1 or claim 2 wherein said first value has the form $ke^{-1}$ (mod $q$), where $e = h(m \| r)$, said masked value has the form $d + ke^{-1}$ (mod $q$), said second value has the form $e$ and said second signature component is calculated as $s = e(d + ke^{-1})$ (mod $q$),; wherein $m$ is said message, $e$ is said first signature component, $k$ is said ephemeral private key, $d$ is said long-term private key, $h$ () represents a cryptographic hash function, and $q$ is the order of the underlying group.

6. The method of claim 1 or claim 2 wherein said first value has the form $h(m)r^{-1}$ (mod($p$ -1)), said masked value has the form $h(m)r^{-1} - d$ (mod($p$- 1)), said second value has the form $k^{-1}r$ (mod($p$ -1)), and said second signature component is calculated as $s = k^{-1}r(h(m)r^{-1} - d)$ (mod($p$ -1); wherein $m$ is said message, $r$ is said first signature component, $k$ is said ephemeral private key, $d$ is said long-term private key, $h()$ represents a cryptographic hash function, and $p$ is a prime number.

7. The method of claim 1 or claim 2 wherein said first value has the form $kr^{-1} h(m)$ (mod($p$ - 1)), said masked value has the form $d + kr^{-1} h(m)$ (mod($p$ 1)), said second value has the form $r$, and said second signature component is calculated as $s = r(d + kr^{-1}h(m))$ (mod($p$ -1)); wherein $m$ is said message, $r$ is said first signature component, $k$ is said ephemeral private key, $d$ is said long-term private key, $h()$ represents a cryptographic hash function, and p is a prime number.

8. The method of claim 1 or claim 2 wherein said first value has the form $h(m)h(r)^{-1}$ (mod $n$), said masked value has the form $h(m)h(r)^{-1} - d$ (mod $n$), said second value has the form $k^{-1}h(r)$ (mod $n$), and said second signature component is calculated as $s = k^{-1}h(r)(h(m)h(r)^{-1} - d)$ (mod $n$); wherein $m$ is said message, $r$ is said first signature component, $k$ is said ephemeral private key, $d$ is said long-term private key, $h()$ represents a cryptographic hash function, and $n$ is the order of the underlying group.

9. The method of claim 1 or claim 2, further comprising message recovery, wherein said first value has the form $k(R(m)r)^{-1}$ (mod $q$), said masked value has the form $d + k(R(m)r)^{-1}$ (mod $q$), said second value has the form $R(m)r$ (mod $q$), and said second signature component is calculated as $s = R(m)r(d + k(R(m)r)^{-1})$ (mod $q$), where $m$ is said message, $r$ is said first signature component, $k$ is said ephemeral private key, $d$ is said long-term private key, $h()$ represents a cryptographic hash function, $q$ divides $p$ -1, and $p$ is a prime integer.

10. The method of claim 1 wherein said first value has the form $krh(m)^{-1}$ (mod($p$ -1)), said masked value has the form $d + krh(m)^{-1}$ (mod($p$-1)), said second value has the form $h(m)$, and said second signature component is calculated as $s = h(m)(d + krh(m)^{-1})$ (mod($p$-1); wherein $m$ is said message, $r$ is said first signature component, $k$ is said ephemeral private key, $d$ is said long-term private key, $h()$ represents a cryptographic hash function, and $p$ is a prime number.

11. The method of anyone of claims 1 to 10 wherein said ephemeral private key comprises a value randomly generated by a random number generator in said correspondent (12).

12. The method of anyone of claims 1 to 11 wherein the operation of multiplying said masked value with said second value is performed using a Montgomery ladder.

13. A device (12) adapted to perform the method of anyone of claims 1 to 12.

**Patentansprüche**

1. Ein Verfahren zum Erzeugen einer digitalen Signatur einer Nachricht in einem kryptographischen Datenkommunikationssystem (10) basierend auf einer zugrundeliegenden Gruppe, wobei das Verfahren durch einen Korrespondent (12) in dem Datenkommunikationssystem (10) durchgeführt wird, wobei der Korrespondent (12) eine Verarbeitungseinheit (28) hat und in einem Speicher (30) einen privaten Langzeit-Schlüssel gespeichert hat, wobei die digitale Signatur eine erste Signaturkomponente und eine zweite Signaturkomponente hat, wobei die zweite Signaturkomponente berechnet wird ohne direktes Multiplizieren des privaten Langzeit-Schlüssels mit einem anderen Wert, wobei das Verfahren aufweist:

    (a) die Verarbeitungseinheit (28) erlangt einen ephemeralen privaten Schlüssel und leitet die erste Signaturkomponente unter Verwendung des ephemeralen privaten Schlüssels ab; und
    (b) die Verarbeitungseinheit (28) erzeugt die zweite Signaturkomponente durch Durchführen von Operationen, die aufweisen:

        (i) Berechnen eines ersten Werts, wobei das Berechnen die Nachricht berücksichtigt und eine Multiplikation mit einem Inversen des anderen Werts umfasst;
        (ii) Erlangen der privaten Langzeit-Schlüssels aus dem Speicher (30) und Durchführen einer einzelnen additiven Operation, wobei die additive Operation eine aus einer Addition und einer Subtraktion ist, auf dem privaten Langzeit-Schlüssel, um den privaten Langzeit-Schlüssel mit dem ersten Wert zu kombinieren, um einen maskierten Wert zu erlangen, dadurch Verhindern einer Bloßstellung des privaten Langzeit-Schlüssels in nachfolgenden Operationen;
        (iii) Ableiten eines zweiten Werts, der den anderen Wert umfasst; und
        (iv) Multiplizieren des maskierten Werts mit dem zweiten Wert, um die zweite Signaturkomponente zu erlangen.

2. Das Verfahren gemäß Anspruch 1, wobei der zweite Wert ebenfalls unter Verwendung des ephemeralen privaten Schlüssels abgeleitet wird.

3. Das Verfahren gemäß Anspruch 1 oder Anspruch 2, wobei der erste Wert die Form $h(m)r^{-1}$ *(mod n)* hat, der maskierte Wert die Form $h(m)r^{-1}+d$ *(mod n)* hat, der zweite Wert die Form $k^{-1}r$ *(mod n)* hat und die zweite Signaturkomponente als $k^{-1}r(h(m)r^{-1}+d)$ *(mod n)* berechnet wird; wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert und *n* die Ordnung der zugrundeliegenden Gruppe ist.

4. Das Verfahren gemäß Anspruch 3, wobei die zugrundeliegende Gruppe eine "elliptische Kurve"-Gruppe ist und die digitale Signatur unter Verwendung eines ECDSA(Elliptic Curve Digital Signature Algorithm)-Verifizierungsprotokolls verifizierbar ist.

5. Das Verfahren gemäß Anspruch 1 oder Anspruch 2, wobei der erste Wert die Form $ke^{-1}$ *(mod q)* hat, wobei $e=h(m\|\ r)$ ist, der maskierte Wert die Form $d + ke^{-1}$ *(mod q)* hat, der zweite Wert die Form e hat und die zweite Signaturkomponente als $s = e(d + ke^{-1})$ *(mod q)* berechnet wird; wobei *m* die Nachricht ist, *e* die erste Signaturkomponente ist, *k* der ephemerale private Schlüssel ist, *d* der private Langzeit-Schlüssel ist, *h()* eine kryptographische Hash-Funktion repräsentiert, und *q* die Ordnung der zugrundeliegenden Gruppe ist.

6. Das Verfahren gemäß Anspruch 1 oder Anspruch 2, wobei der erste Wert die Form $h(m)r^{-1}$ *(mod(p-1))* hat, der maskierte Wert die Form $h(m)r^{-1}-d$ *(mod(p-1))* hat, der zweite Wert die Form $k^{-1}r$ *(mod(p-*1)) hat und die zweite Signaturkomponente als $s = k^{-1}r(h(m)r^{-1}-d)$ *(mod(p-1))* berechnet wird; wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert, und *p* eine Primzahl ist.

7. Das Verfahren gemäß Anspruch 1 oder Anspruch 2, wobei der erste Wert die Form $kr^{-1}\ h(m)$ *(mod (p-1))* hat, der maskierte Wert die Form $d + kr^{-1}\ h(m)$ *(mod (p-1))* hat, der zweite Wert die Form r hat und die zweite Signaturkomponente als $s= r(d+ kr^{-1}\ h(m))$ *(mod (p-1))* berechnet wird; wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert, und *p* eine Primzahl ist.

8. Das Verfahren gemäß Anspruch 1 oder Anspruch 2, wobei der erste Wert die Form $h(m)h(r)^{-1}$ *(mod n)* hat, der maskierte Wert die Form $h(m)h(r)^{-1} - d$ *(mod n)* hat, der zweite Wert die Form $k^{-1}h(r)$ *(mod n)* hat und die zweite Signaturkomponente als $s = k^{-1}h(r)(h(m)h(r)^{-1}-d)$ *(mod n)* berechnet wird; wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert, und *n* die Ordnung der zugrundeliegenden Gruppe ist.

9. Das Verfahren gemäß Anspruch 1 oder Anspruch 2, das weiter eine Nachrichtenwiederherstellung aufweist, wobei der erste Wert die Form $k(R(m)r)^{-1}$ *(mod q)* hat, der maskierte Wert die Form $d + k(R(m)r)^{-1}$ *(mod q)* hat, der zweite Wert die Form *R(m)r (mod q)* hat und die zweite Signaturkomponente als $s = R(m)r(d+k(R(m)r)^{-1})(mod\ q)$ berechnet wird, wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert, *q p-1* teilt und *p* eine Primzahl ist.

10. Das Verfahren gemäß Anspruch 1, wobei der erste Wert die Form $krh(m)^{-1}\ (mod\ (p-1))$ hat, der maskierte Wert die Form $d + krh(m)^{-1}\ (mod\ (p-1))$ hat, der zweite Wert die Form *h(m)* hat und die zweite Signaturkomponente als $s = h(m)(d + krh(m)^{-1})\ (mod\ (p-1))$ berechnet wird; wobei *m* die Nachricht ist, *r* die erste Signaturkomponente ist, *k* der ephemerale private Schlüssel ist, *d* der private Langzeit-Schlüssel ist, *h()* eine kryptographische Hash-Funktion repräsentiert, und *p* eine Primzahl ist.

11. Das Verfahren gemäß einem der Ansprüche 1 bis 10, wobei der ephemerale private Schlüssel einen Wert aufweist, der durch einen Zufallszahlengenerator in dem Korrespondent (12) zufällig erzeugt wird.

12. Das Verfahren gemäß einem der Ansprüche 1 bis 11, wobei die Operation des Multiplizierens des maskierten Werts mit dem zweiten Wert unter Verwendung einer Montgomery-Leiter durchgeführt wird.

13. Eine Vorrichtung (12), die ausgebildet ist, das Verfahren gemäß einem der Ansprüche 1 bis 12 durchzuführen.

**Revendications**

1. Procédé de génération d'une signature numérique d'un message dans un système de communication de données cryptographique (10) sur la base d'un groupe sous-jacent, le procédé étant effectué par un correspondant (12) dans le système de communication de données (10), le correspondant (12) ayant une unité de traitement (28) et ayant stocké en mémoire (30) une clé privée à long terme, ladite signature numérique ayant un premier composant signature et un second composant de signature, ledit second composant de signature étant calculé sans multiplier directement ladite clé privée à long terme avec une autre valeur, le procédé comprenant :

    (a) l'unité de traitement (28) obtenant une clé privée éphémère et dérivant ledit premier composant de signature en utilisant ladite clé privée éphémère ; et

    (b) l'unité de traitement (28) générant ledit second composant de signature en effectuant des opérations comprenant :

        (i) le calcul d'une première valeur, ledit calcul incorporant ledit message et comprenant une multiplication avec un inverse de ladite autre valeur ;
        (ii) l'obtention de ladite clé privée à long terme à partir de la mémoire (30) et l'exécution d'une opération additive unique, ladite opération additive étant l'une d'une addition et d'une soustraction, sur ladite clé privée à long terme pour combiner ladite clé privée à long terme avec ladite première valeur afin d'obtenir une valeur masquée, empêchant ainsi l'exposition de ladite clé privée à long terme dans des opérations subséquentes ;
        (iii) la dérivation d'une seconde valeur qui comprend ladite autre valeur ; et,
        (iv) la multiplication de ladite valeur masquée avec ladite seconde valeur pour obtenir ledit second composant de signature.

2. Procédé selon la revendication 1, dans lequel ladite seconde valeur est également dérivée en utilisant ladite clé privée éphémère.

3. Procédé selon la revendication 1 ou la revendication 2, dans lequel ladite première valeur a la forme $h(m)r^{-1}\ (mod\ n)$, ladite valeur masquée a la forme $h(m)r^{-1}+d(mod\ n)$, ladite seconde valeur a la forme $k^{-1}r\ (mod\ n)$, et ledit second composant de signature est calculé comme $k^{-1}r(h(m)r^{-1}+d)\ (mod\ n)$ ; dans lequel *m* est ledit message, *r* est ledit premier composant de signature, *k* est ladite clé privée éphémère, *d* est ladite clé privée à long terme, *h()* représente une fonction de hachage cryptographique, et *n* est l'ordre dudit groupe sous-jacent.

4. Procédé selon la revendication 3, dans lequel ledit groupe sous-jacent est un groupe à courbe elliptique, et ladite signature numérique est vérifiable en utilisant un protocole de vérification d'algorithme de signature numérique à courbe elliptique (ECDSA).

5. Procédé selon la revendication 1 ou la revendication 2, dans lequel ladite première valeur a la forme $ke^{-1}\ (mod\ q)$, où $e = h\ (m\ \|\ r)$, ladite valeur masquée a la forme $d+ke^{-1}\ (mod\ q)$, ladite seconde valeur a la forme e et ledit second composant de signature est calculé comme $s = e(d+ke^{-1})\ (mod\ q)$ ; dans lequel *m* est ledit message, e est ledit premier composant de signature, *k* est ladite clé privée éphémère, *d* est ladite clé privée à long terme, *h()* représente une fonction de hachage cryptographique, et *q* est l'ordre du groupe sous-jacent.

**6.** Procédé selon la revendication 1 ou la revendication 2, dans lequel ladite première valeur a la forme $h(m)r^{-1}(\bmod(p-1))$, ladite valeur masquée a la forme $h(m)r^{-1} -d(\bmod(p-1))$, ladite seconde valeur a la forme $k^{-1}r(\bmod (p-1))$, et ledit second composant de signature est calculé comme $s = k^{-1} r(h(m)r^{-1} -d) (\bmod(p-1))$ ; dans lequel $m$ est ledit message, $r$ est ledit premier composant de signature, $k$ est ladite clé privée éphémère, $d$ est ladite clé privée à long terme, $h()$ représente une fonction de hachage cryptographique, et $p$ est un nombre premier.

**7.** Procédé selon la revendication 1 ou la revendication 2, dans lequel ladite première valeur a la forme $kr^{1} h(m) (\bmod (p-1))$, ladite valeur masquée a la forme $d+kr^{-1} h(m) (\bmod (p-1))$, ladite seconde valeur a la forme $r,$ et ledit second composant de signature est calculé comme $s = r(d+kr^{-1}h(m)) (\bmod (p-1))$ ; dans lequel $m$ est ledit message, $r$ est ledit premier composant de signature, $k$ est ladite clé privée éphémère, d est ladite clé privée à long terme, $h()$ représente une fonction de hachage cryptographique, et p est un nombre premier.

**8.** Procédé selon la revendication 1 ou la revendication 2, dans lequel ladite première valeur a la forme $h(m)h(r)^{-1} (\bmod n)$, ladite valeur masquée a la forme $h(m)h(r)^{-1} -d(\bmod n)$, ladite seconde valeur a la forme $k^{-1} {}^{1}h(r) (\bmod n)$, et ledit second composant de signature est calculé comme $s = k^{-1}h(r)(h(m)h(r)^{-1} -d) (\bmod n)$ ; dans lequel $m$ est ledit message, $r$ est ledit premier composant de signature, $k$ est ladite clé privée éphémère, $d$ est ladite clé privée à long terme, $h()$ représente une fonction de hachage cryptographique, et $n$ est l'ordre du groupe sous-jacent.

**9.** Procédé selon la revendication 1 ou la revendication 2, comprenant en outre le recouvrement de message, dans lequel ladite première valeur a la forme $k(R(m)r)^{-1} (\bmod q)$, ladite valeur masquée a la forme $d+k(R(m)r)^{-1} (\bmod q)$, ladite seconde valeur a la forme $R(m)r (\bmod q)$, et ledit second composant de signature est calculé comme $s = R(m)r(d+k(R(m)r^{-1}) (\bmod q)$, où $m$ est ledit message, $r$ est ledit premier composant de signature, $k$ est ladite clé privée éphémère, $d$ est ladite clé privée à long terme, $h()$ représente une fonction de hachage cryptographique, $q$ divise $p$-1, et $p$ est un entier premier.

**10.** Procédé selon la revendication 1, dans lequel ladite première valeur a la forme $krh(m)^{-1} (\bmod (p-1))$, ladite valeur masquée a la forme $d+krh(m)^{-1} (\bmod (p-1))$, ladite seconde valeur a la forme $h(m)$, et ledit second composant de signature est calculé comme $s = h(m)(d+krh(m)^{-1}) (\bmod (p-1))$ ; dans lequel $m$ est ledit message, $r$ est ledit premier composant de signature, $k$ est ladite clé privée éphémère, $d$ est ladite clé privée à long terme, $h()$ représente une fonction de hachage cryptographique, et $p$ est un nombre premier.

**11.** Procédé selon l'une quelconque des revendications 1 à 10, dans lequel ladite clé privée éphémère comprend une valeur générée aléatoirement par un générateur de nombres aléatoires dans ledit correspondant (12).

**12.** Procédé selon l'une quelconque des revendications 1 à 11, dans lequel l'opération de multiplication de ladite valeur masquée avec ladite seconde valeur est effectuée en utilisant une échelle de Montgomery.

**13.** Dispositif (12) adapté pour effectuer le procédé selon l'une quelconque des revendications 1 à 12.

FIG. 1

FIG. 2

**FIG. 3**

EP 2 378 707 B1

```
┌──────────────────────────────────────────┐
│      Derive first signature component     │ ◄──── 102
└──────────────────────────────────────────┘
                      │
                      ▼
┌──────────────────────────────────────────┐
│      Derive second signature component    │ ◄──── 104
│  ┌────────────────────────────────────┐   │
│  │  Calculate first value using first  │   │ ◄──── 104a
│  │   signature component and message m │   │
│  └────────────────────────────────────┘   │
│                   │                         │
│                   ▼                         │
│  ┌────────────────────────────────────┐   │
│  │   Perform single additive operation │   │ ◄──── 104b
│  │   on long-term key to obtain masked │   │
│  │              value                   │   │
│  └────────────────────────────────────┘   │
│                   │                         │
│                   ▼                         │
│  ┌────────────────────────────────────┐   │
│  │   Derive second value using inverse │   │ ◄──── 104c
│  │      of a component of first value  │   │
│  └────────────────────────────────────┘   │
│                   │                         │
│                   ▼                         │
│  ┌────────────────────────────────────┐   │
│  │  Multiply masked value with second  │   │ ◄──── 104d
│  │   value to obtain second signature  │   │
│  │              component               │   │
│  └────────────────────────────────────┘   │
└──────────────────────────────────────────┘
```

FIG. 4

Generate random $k$ — 302

Obtain $K = kG$ — 304

Calculate 1st signature component

$$r = \overline{x_K} \bmod n$$

— 306

Calculate signing equation

$$s = k^{-1}r\left(h(m)r^{-1} + d\right)\bmod n$$

— 308

Send (r, s) and message $m$ to recipient — 310

FIG. 5

```
┌─────────────────────────────────────────┐
│       Generate random integer k          │ ◄───── 402
└─────────────────────────────────────────┘
                    │
                    ▼
┌─────────────────────────────────────────┐
│    Calculate 1ˢᵗ signature component     │ ◄───── 404
│          r = α^k mod p                   │
└─────────────────────────────────────────┘
                    │
                    ▼
┌─────────────────────────────────────────┐
│            Compute hash                  │ ◄───── 406
│          e = h(m ∥ r)                    │
└─────────────────────────────────────────┘
                    │
                    ▼
┌─────────────────────────────────────────┐
│      Calculate signing equation          │ ◄───── 408
│        s = e(d + ke⁻¹)mod q              │
└─────────────────────────────────────────┘
```

$r = \alpha^{k} \bmod p$

$e = h(m \parallel r)$

$s = e(d + ke^{-1})\bmod q$

**FIG. 6**

```
┌─────────────────────────────────────────────┐
│              Generate random k                │ ◄──── 502
└─────────────────────────────────────────────┘
                        │
                        ▼
┌─────────────────────────────────────────────┐
│        Calculate 1ˢᵗ signature component      │ ◄──── 504
│           r = (αᵏ mod p)mod q                 │
└─────────────────────────────────────────────┘
                        │
                        ▼
┌─────────────────────────────────────────────┐
│           Calculate signing equation          │ ◄──── 506
│        s = k⁻¹r(h(m)r⁻¹ + d)mod q            │
└─────────────────────────────────────────────┘
```

Calculate 1$^{st}$ signature component

$$r = \left(\alpha^{k} \bmod p\right)\bmod q$$

Calculate signing equation

$$s = k^{-1}r\left(h(m)r^{-1} + d\right)\bmod q$$

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008106793 A

**Non-patent literature cited in the description**

- **MENEZ et al.** Handbook of Applied Cryptography. CRC Press, 1997

- **THOMAS S. MESSERGES.** Power analysis attacks and countermeasures for cryptographic algorithms. *Ph.D Dissertation*